# EUROPEAN PATENT APPLICATION

(11) **EP 0 605 077 A1**
(43) Date of publication of application: **06.07.1994**
(21) Application number: 93302938.1
(22) Date of filing: 15.04.1993
(51) Int. Cl.: A01B 1/16, A01D 11/00, A01G 1/12

(54) **Picking and/or weeding implements**

(30) Priority: 30.12.1992 GB 9227094
(71) Applicant: Lee, Chih-Chiang, Taipei (TW)
(72) Inventor: Lee, Chih-Chiang, Taipei (TW)
(74) Representative: Cummings, Sean Patrick

(57) **Abstract**

A picking and/or weeding implement comprises first and second prongs (14,17) and at least one barb (18) associated with at least one of the prongs (14,17). In some embodiments, primarily intended for smaller weeds, the prongs (14,17) are a fixed distance apart. In other embodiments, primarily intended for larger weeds, the spacing between the prongs (33-38) is adjustable. In the embodiments in which the prongs (33-38) are adjustable, there is a movable prong (36-38) and a fixed prong (33-35) and the movable prong (36-38) can be tilted during a weeding operation so that the barb can impale a weed. A set of such implements, and methods for using such implements, are also disclosed.

## Description

This invention relates to picking and/or weeding implements for the removal of plants, and especially weeds such as dandelions or daisies, from soil in, for example, grass lawns, yards, parks, golf courses or agricultural fields.

Conventionally, weeding or picking has been performed by non-specialised tools such as spades, rakes, hoes, forks or trowels. The weakness of these conventional tools is that they often leave a large hole when used to remove a plant from the soil. The size of this hole is particularly problematic when weeds are found in grassed areas such as lawns, as the hole scars the lawn and spoils its appearance. This is one of the main reasons why weedkillers are used, despite their toxicity to humans and animals.

The principal object of this invention is to provide an improved picking and/or weeding implement, and a method of using such an implement, which minimises the disturbance of soil necessary to remove unwanted weeds or plants growing therein. This minimises the size of the resulting hole in the soil, and makes the weeding process easier, less tiring, quicker and generally more efficient. By doing so, the use of weedkillers is discouraged. Further, the use of the implement of this invention provides exercise and recreation denied to those who rely upon weedkillers.

There have been many proposals for specialised picking and/or weeding implements in an effort to solve the problems of non-specialised tools. One such proposal is the subject of UK Patent No. 319,114 to Horstmann, which discloses a weeding implement generally in the form of a pair of tongs, wherein the jaws of the tongs are sharpened to be driven into the soil around a weed and each have a row of inwardly-facing barbs which grip the weed when the jaws are brought together.

The implement devised by Horstmann is an improvement over non-specialised implements but is not ideal. Essentially, the barbs thereof define a pair of gripping surfaces which assist the jaws in gripping a weed but are, in themselves, too short to hook the weed or the roots thereof. Further, the plurality of barbs on each jaw is a complex arrangement which adds to manufacturing costs. The Horstmann device is also bulky, thus causing excessive damage to the soil around the weed, and awkward to use. Thus, a further object of this invention is to improve upon existing specialised implements such as that devised by Horstmann.

Like Horstmann, the picking and/or weeding implement of this invention comprises first and second prongs adapted to be driven endways into soil, and has at least one barb extending inwardly from a free end region of the first prong.

Several novel features serve to characterise this invention with respect to Horstmann. In one sense, the invention is characterised in that at least a major portion of the second prong extending from the free end thereof, and preferably the whole of the second prong, is continuous, being uninterrupted by inwardly-extending barbs. More generally, it is preferred that the second prong is entirely devoid of barbs.

It has been found that weeding may be efficiently performed even if only one of the prongs has a barb, which arrangement is simple and cheap to make as well as being simple to use and less disruptive of the soil in which the weed is growing. For example, the first prong holds the roots of a weed with the aid of the barb while the second prong is used to help wind the roots around the implement prior to its withdrawal from the soil.

Preferably, the barb is situated at or near to the free end of the first prong, and ideally forms the free end of that prong. Further, it is preferred that a major portion of the first prong, extending from the root end thereof, is continuous and uninterrupted by barbs such that the barb or barbs situated at or near to the free end of the first prong is or are the only barb or barbs associated with that prong. For optimum weeding efficiency, the barb is notably longer than the barbs of the prior art, extending up to approximately half-way across the gap between the prongs.

By means of the invention, weeds can be removed with great speed. It has been found that, when using the invention on typical weeds growing in moist, well-watered soil, a weed can usually be removed in well under five seconds. Those with short roots can be removed in less than three seconds.

For ease of insertion into soil, to keep the implement as compact as possible, and to minimise disturbance to the soil during use of the implement, it is preferred that the prongs are substantially straight, slim and parallel and that the prongs and the barb lie in a common plane. For optimum simplicity, the barb is preferably integral with the first prong.

The prongs may be of equal length, particularly if the implement is relatively large in size. However, the prongs need not be equal in length and, indeed, in most embodiments, it is preferred that one prong is longer than the other. In its broadest sense, the invention is not limited to any particular difference between the lengths of the prongs but it is preferred that the longer prong is 2 mm to 15 mm longer than the shorter prong, depending upon the size of the implement concerned. Where the prongs are of dissimilar length, it is preferred that the first prong is the shorter prong, that is, that the shorter prong has a barb at or near its free end whereas the longer prong does not.

A major portion of the barb may be substantially straight, or may be curved. In order that the roots of a weed may pass easily around the barb to be engaged thereby, the end portion of the barb is preferably bent with respect to the remainder of the barb and lies generally parallel to the first prong. The end portion of the barb may, for example, be 1 mm to 2 mm in length.

For optimum engagement with a weed, the barb suitably has a tip portion that is bent towards the first prong. The tip portion may, for example, be approximately 1 mm in length.

In certain embodiments, intended primarily for larger weeds, one of the prongs is fixed in relation to a handle part of the implement and another of the prongs is movable in relation to the handle part.

For semi-automatic operation, biasing means such as a spring are provided to urge the movable prong into a rest position when released. In that rest position, the first and second prongs are suitably substantially parallel.

To cater for differently-sized weeds, it is preferred that the movable prong is movable to adjust the spacing between it and the fixed prong, with adjustment of the spacing between the prongs being effected by a variable-length means extending transversely between the prongs.

The implement of this invention can be made in a range of sizes, suitably supplied as a set, with each size being selected to suit a particular size or type of weed. Thus, the invention also encompasses a set of differently-sized implements each as defined above. The facility for selecting the most appropriate size of implement from a set, or for adjusting the spacing between the prongs of the implement, helps to minimize still further the disturbance of the soil, and makes the weeding process as easy as possible.

The variable-length means may comprise at least one transversely-extending screw-threaded shaft fitted with at least one first nut. To lock the variable-length means, the implement may be provided with at least one second nut which is capable of co-operating with the first nut.

The movement of the movable prong is suitably restrained by a peg carried on the shaft. In a preferred embodiment, there are first and second shafts each carrying a peg and extending through the movable prong. The peg of the first shaft is situated on one side of the movable prong facing towards the fixed prong and the peg of the second shaft is situated on the other side of the movable prong facing away from the fixed prong, thereby to restrain movement of the movable prong in two directions but without preventing tilting or pivoting. This is important because, for optimum weeding efficiency, it is preferred that the movable prong is tiltable or pivotable with respect to the fixed prong such that the free ends of the prongs can be moved together while maintaining a gap or spacing between the prongs at the level of the pivot axis.

The invention also encompasses methods of weeding and/or picking using implements as defined above.

One such method comprises driving the pronged implement into soil around or into a weed or plant or a root thereof to hook or impale the weed or plant or a root thereof on the barb associated with a first or second prong of the pronged implement, and pivoting or tilting the first or second prong to move together the respective free end portions of the first and second prongs, characterised in that the pivoting or tilting action is performed while maintaining a gap between the first and second prongs at the level of the pivot axis.

The method may further comprise squeezing together the first and second prongs by hand to effect the pivoting or tilting action, and/or adjusting the spacing between the first and second prongs while maintaining a given angular relationship between them.

When driven into the soil, the implement may be turned to wind the roots around the prongs, whereupon the implement and the weed or plant can be withdrawn together from the soil.

The implement of this invention is preferably made substantially of metal and/or plastics material although wood may be used to form a handle.

In order that this invention may be more readily understood, reference will now be made, by way of example only, to the accompanying drawings in which:
Figure 1 is a front elevational view showing a first embodiment of the implement of the invention;
Figure 2 shows part of the implement depicted in Figure 1, to an enlarged scale;
Figure 3 is a rear elevational view of the implement depicted in to Figure 1 and Figure 2;
Figure 4 is a side elevational view of the implement depicted in Figures 1 to 3;
Figures 5 and 6 are front elevational views showing various ways in which an implement as depicted in Figures 1 to 4 may be used in weeding or picking;
Figure 7 is a side elevational view showing a second embodiment of the implement of the invention;
Figure 8 is a front elevational view of the implement depicted in Figure 7;
Figure 9 is a side elevational view of the implement depicted in Figures 7 and 8, taken from the side opposite to that of Figure 7;
Figure 10 is a side elevational view corresponding to Figure 7 but showing the implement partially disassembled;
Figure 11 is an enlarged perspective view showing a detail of the implement depicted in Figures 7 to 10; and
Figure 12 is a rear elevational view of the implement depicted in Figures 7 to 11, in use in a weeding and/or picking operation.

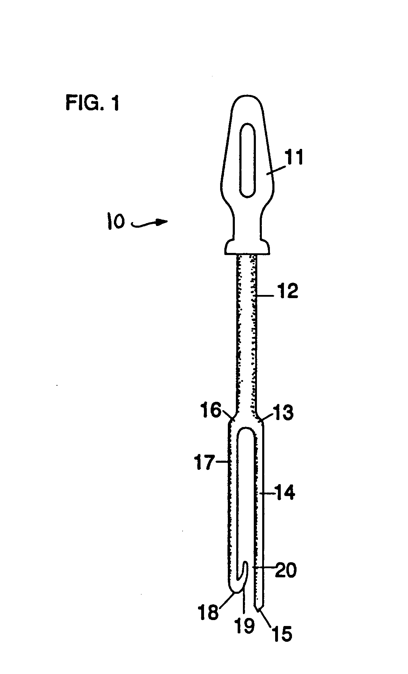

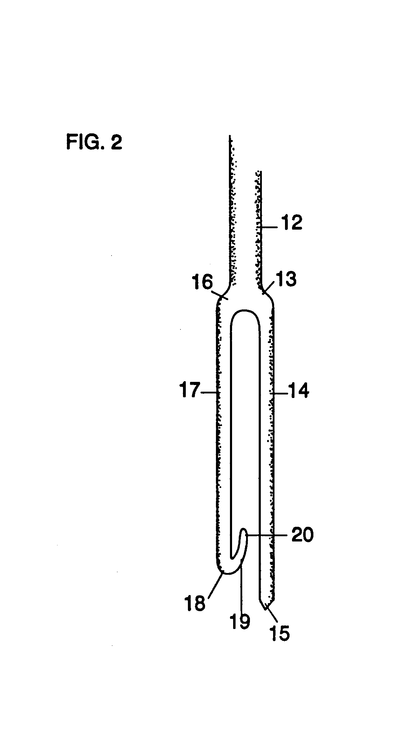

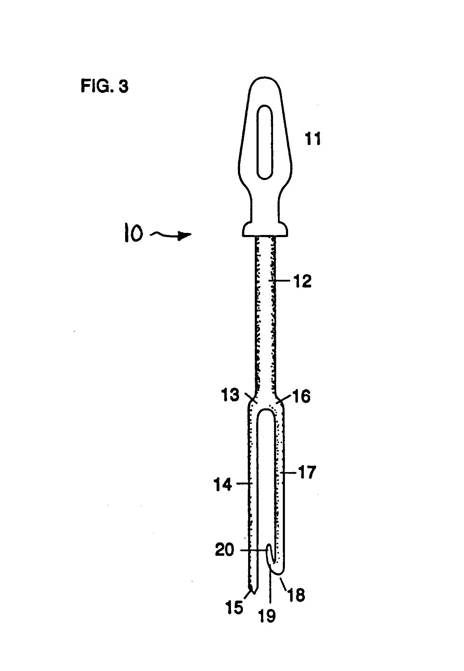

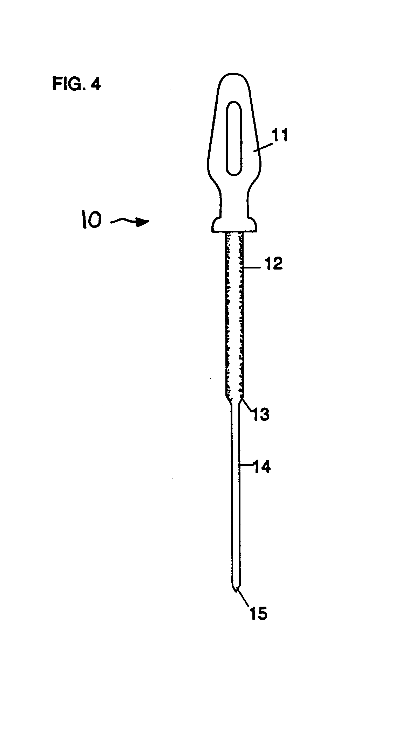

Referring firstly to Figures 1 to 4, in a first embodiment a picking and/or weeding implement 10 comprises a handle 11 having a shaft 12 connected thereto. The shaft extends from the handle to a branch portion 13, 16. Depending in parallel relation from the branch portion 13, 16 are two straight prongs 14, 17 comprising a fork part of the implement 10. In the embodiment illustrated, prong 14 is a little longer, preferably 2 mm to 6 mm longer, than prong 17 so that the end 15 of prong 14 extends beyond the end of prong 17.

The end portion of prong 17 has an obliquely- extending barb 19. The barb 19 may be of any suitable length but, preferably, extends up to approximately half-way across the gap between the prongs.

The end portion of the barb 19, that is, the final 1 to 3 mm of barb 19, is bent with respect to the remainder of barb 19 to extend generally parallel to the prong 17. This allows the roots of weeds or plants to pass the barb 19 more easily during a weeding or picking operation. The tip portion 20 of the barb 19 is bent slightly towards prong 17.

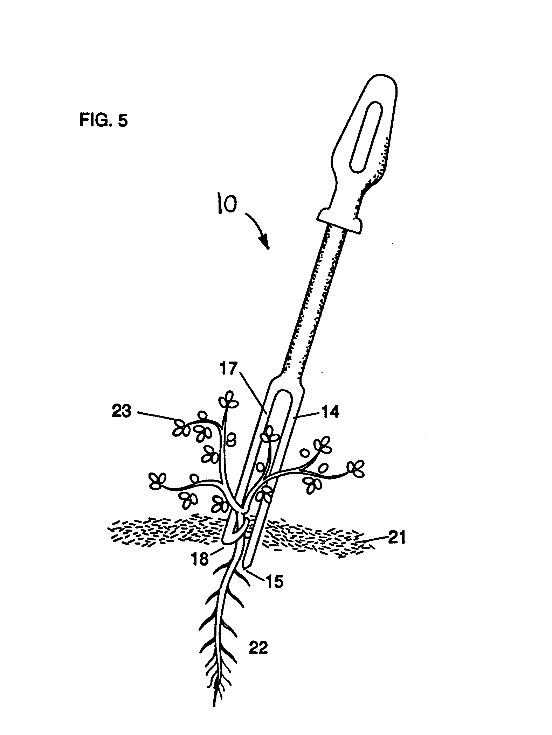

Referring now to Figure 5 of the drawings, 22 represents the roots of a weed 23, which roots are thin, long, and flexible yet strong. In a weeding operation, a user inserts the fork part of the implement 10 endways into the soil 21 in such a position as to surround the roots 22, that is, with the roots 22 lying between the prongs 14, 17 or at least with the prongs 14, 17 amongst the root system of the weed 23.

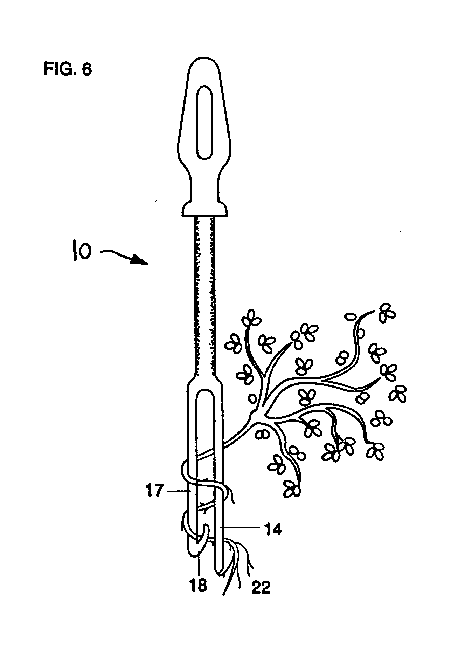

When the fork part of the implement 10 reaches an appropriate depth into the soil, the roots 22 are caught by the barb by moving the fork part sideways. The barb 19 may impale a root or a root or roots may become entangled with or hooked by the barb. Then, if the roots 22 are very long, they are wound around the fork part, as shown in Figure 6, by turning the implement about its longitudinal axis such that the prongs 14 and 17 cooperate to wind in the roots 22 in the manner of spaghetti on a fork. The weed 23 can then be removed by pulling the implement 10 out of the soil. Of course, if the roots are short, the winding step may be omitted.

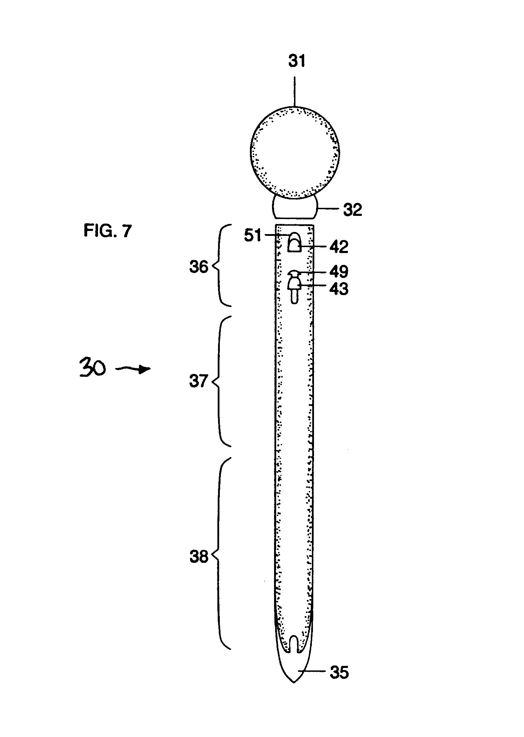

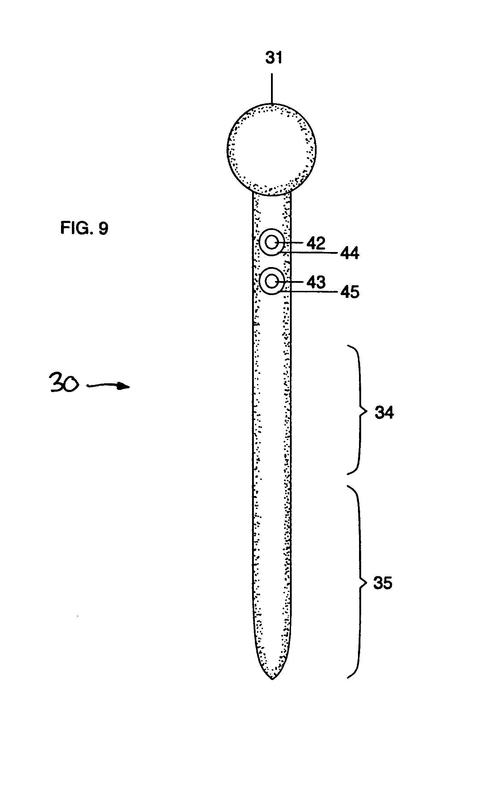

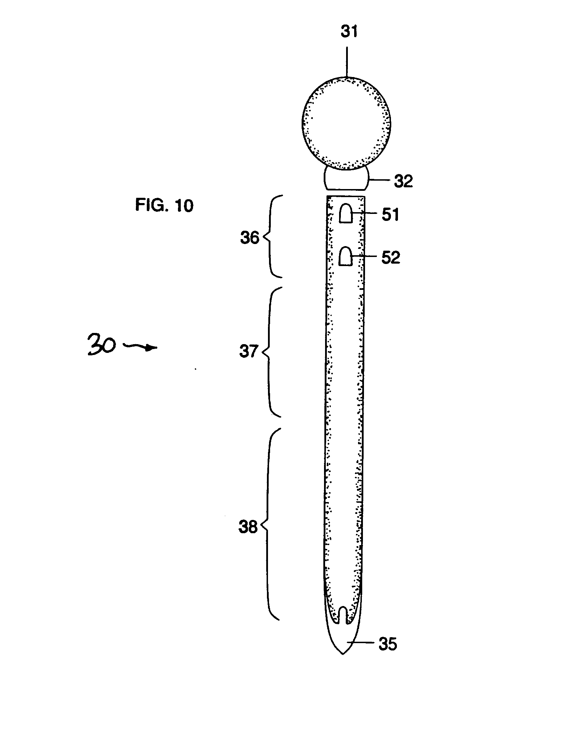

Reference is now made to a second embodiment of the invention as depicted in the remaining drawings, Figures 7 to 12. In those drawings, a picking and/or weeding implement 30 is of generally T-shaped configuration and comprises a cylindrical handle 31, which is preferably of plastics or wood, dimensioned to fit comfortably into the palm of a user's hand. A straight fixed prong 33, 34, 35, a stop pad 32 and a support bar 41 depend from, and are attached to, the handle 31. A movable prong 36, 37, 38 having barbs 39, 40 at its free end is attached to the fixed prong 33, 34, 35 and to the support bar 41.

It is preferred that the movable prong 36, 37, 38 is shorter than the fixed prong 33, 34, 35, as shown; the respective lengths may differ to any suitable extent but a difference in the range 5 mm to 15 mm is preferred.

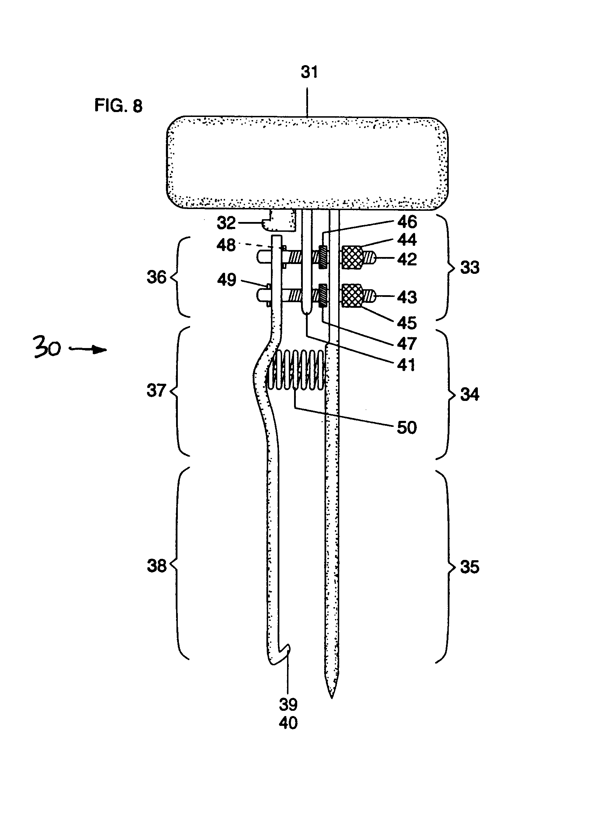

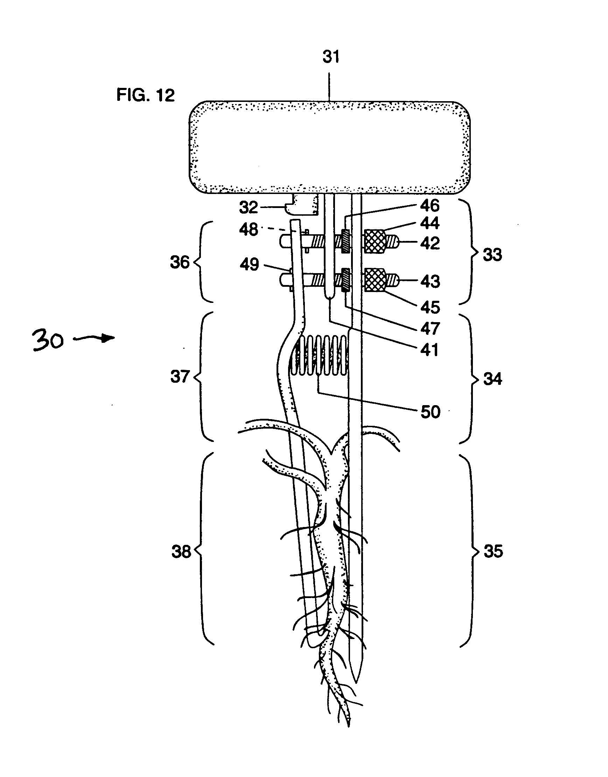

At the rest position shown in Figure 8, the movable prong 36, 37, 38 extends generally parallel to the fixed prong 33, 34, 35. However, as will be explained, the movable prong 36, 37, 38 may be tilted or pivoted with respect to the fixed prong 33, 34, 35 so that the free end of the movable prong can be brought closer to the free end of the fixed prong as shown in Figure 12. Further, as will also be explained, the rest position of the movable prong 36, 37, 38 can be adjusted so that, for example, the overall spacing between the prongs can be varied to suit differently-sized weeds or plants.

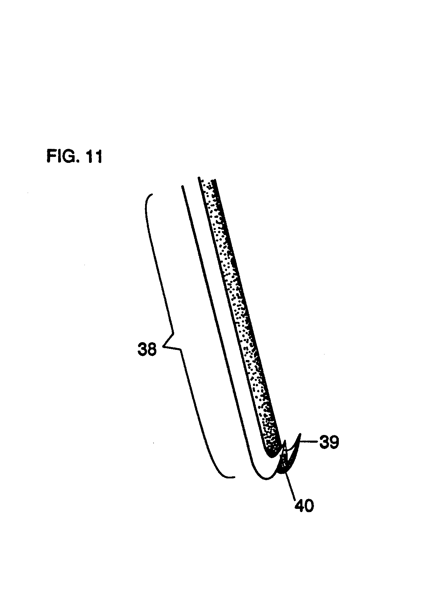

The movable prong has upper, middle and lower sections respectively numbered 36, 37 and 38. Upper section 36 is of flat, rectangular cross-section and middle and lower sections 37 and 38 are of part-circular cross-section, the curved part of which describes between 90 and 180 degrees of arc. The movable prong is generally straight but its middle section 37 is bent outwardly to form a hand grip, and its lower section 38 is bent inwardly to form the barbs 39, 40 which are at an angle of approximately 50 to 60 degrees to the longitudinal axis of the lower section 38 of the movable prong. The barbs 39, 40 are best seen in Figure 11.

Similarly, the fixed prong has an upper section 33 of rectangular cross-section, and middle and lower sections respectively numbered 34 and 35 of part-circular cross-section, the curved part of which also describes between 90 and 180 degrees of arc. The lower section 35 has a pointed tip for ease of insertion into soil.

Attachment of the movable prong 36, 37, 38 to the fixed prong 33, 34, 35 is effected by two parallel part-threaded shafts 42, 43 which extend from the upper section 33 of the fixed prong through the support bar 41 and through holes 51, 52 in the upper section 36 of the movable prong.

Each of the shafts 42, 43 has a threaded portion and an unthreaded portion. As best shown in Figure 7, the respective unthreaded portions of the shafts 42, 43 are a close fit within the holes 51, 52 in a direction transverse to the longitudinal axis of the movable prong 36, 37, 38 but, in a direction parallel to that axis, the holes 51, 52 are slightly larger than the shafts 42, 43. This allows a degree of movement so that the movable prong can be tilted as mentioned above. Excessive movement parallel to the longitudinal axis of the movable prong 36, 37, 38, which could bend the shafts 42, 43 under the pressure of use, is prevented by the aforementioned stop pad 32 situated on the underside of the handle 31.

As shown in Figures 8 and 12, the unthreaded portions of the shafts 42, 43 receive pegs respectively numbered 48 and 49 which together confine the upper section 36 of the movable prong but allow it some freedom of movement. The respective pegs 48, 49 lie on opposing sides of the upper section 36 of the movable prong to restrain movement of the upper section 36 of the prong in two directions. Specifically, the peg 48 on shaft 42 lies on the inner side of the upper section 36 of the movable prong (that is, the side facing the upper section 33 of the fixed prong), thereby to restrain movement of the upper section 36 towards the upper section 33 of the fixed prong. Conversely, the peg 49 on shaft 43 is situated on the outer side of the upper section 36 of the movable prong (that is, the side facing away from the upper section 33 of the fixed prong), and so restrains movement of the upper section 36 of the movable prong away from the upper section 36 of the fixed prong. However, the movable prong 36, 37, 38 is free to tilt about the peg 49, as shown in Figure 12, when the prongs are squeezed together by hand.

The squeezing force is exerted against a spring 50 situated between the middle section 34 of the fixed prong and the middle section 37 of the movable prong. The spring 50 acts to urge the respective prongs apart; thus, when the implement 30 is released, the movable prong 36, 37, 38 will automatically return to the rest position defined by the pegs 48, 49. At that position, the upper section 36 of the movable prong abuts both of the pegs 48, 49.

The threaded portions of the shafts 42, 43 extend through the upper section 33 of the fixed prong. Each shaft 42, 43 has a pair of nuts on its threaded portion. The pair of nuts comprises an outer nut and an inner nut situated on opposing sides of the upper section 33 of the fixed prong. The respective outer nuts are numbered 44 and 45, and the respective inner nuts are numbered 46 and 47. This arrangement enables the shafts 42, 43 to be moved with respect to the fixed prong 33, 34, 35 and locked in any desired position, thereby to adjust the rest position of the implement 30 and, in particular, to adjust the spacing between the prongs. Specifically, the spacing can be narrowed by advancing the nuts 44, 45, 46, 47 along the threaded portions of the shafts 42, 43, which is achieved by turning the nuts in a forward or clockwise sense to the appropriate extent. Obviously, the spacing can be widened by turning the nuts in the opposite sense.

The shafts 42, 43 are largely of circular cross-section but the unthreaded portions of each shaft have a flat section which engages with a corresponding flat section of the appropriate hole 51, 52 in the upper section 36 of the movable prong. This prevents rotation of the shafts 42, 43 within their associated holes 51, 52 as the nuts 44, 45, 46, 47 are turned about the threaded portions at the other ends of the shafts 42, 43.

Figure 12 shows the implement 30 in use in picking a weed. In a similar manner to the use of the implement 10 described previously, the user drives the prongs of the implement 30 endways into the soil in such a position as to surround the root of the weed, that is, with the root lying between the prongs, or at least with the prongs amongst the root system of the weed.

When the prongs of the implement 30 reach an appropriate depth into the soil, the root is caught by the barbs 39, 40 by squeezing together the prongs by hand (hand not shown), thus moving the movable prong 36, 37, 38 sideways. The barbs 39, 40 may impale a root, or a root or roots may become entangled with or hooked by the barbs. As before, if the root is very long, it may be wound around the prongs by turning the implement 30 about its longitudinal axis. The weed can then be removed by pulling the implement 30 out of the soil. Again, if the roots are short and easily impaled, the winding step may be omitted.

Larger or smaller weeds can be accommodated by adjusting the spacing between the prongs of the implement 30, preferably before the implement 30 is driven into the soil.

The invention is not limited to the embodiments described above and may be embodied in many different structures without departing from the inventive concept. Similarly, the user may choose his or her own methods of using the various implements; the methods described are given by way of example only.

## Claims

1. A picking and/or weeding implement (10, 30) comprising first and second prongs (14, 17, 33-38) adapted to be driven endways into soil and having at least one barb (19, 39, 40) extending inwardly from a free end region of the first prong (17, 36-38), characterised in that at least a major portion of the second prong (14, 33-35) extending from the free end thereof is continuous, being uninterrupted by inwardly-extending barbs.

2. An implement (10, 30) according to claim 1, characterised in that the barb extends up to approximately half-way across the gap between the prongs.

3. An implement (10, 30) according to claim 1 or claim 2, characterised in that the barb (19, 39, 40) and the prongs (14, 17, 33-38) lie in a common plane, and in that the prongs (14, 17, 33-38) are substantially straight and substantially parallel to one another.

4. An implement (10, 30) according to any preceding claim, characterised in that the second prong (14, 33-35) is longer than the first prong (17, 36-38).

5. An implement (10, 30) according to any preceding claim, characterised in that the end portion of the barb (19, 39, 40) is bent with respect to the remainder of the barb (19, 39, 40) and lies generally parallel to the first prong (17, 36-38), and wherein the tip portion (20) of the barb (19, 39, 40) is optionally bent towards the first prong (17, 36-38).

6. An implement (30) according to any preceding claim, characterised in that one of the first and second prongs (33-35) is fixed in relation to a handle part (31) and in that the other of the first and second prongs (36-38) is movable in relation to the handle part (31).

7. An implement (30) according to claim 6, characterised by biasing means (50) arranged to urge the movable prong (36-38) into a rest position when released.

8. An implement (30) according to claim 7, characterised in that the first (36-38) and second (33-35) prongs are substantially parallel when the movable prong (36-38) is in the rest position.

9. An implement (30) according to any of claims 6 to 8, characterised in that the movable prong (36-38) is movable to adjust the spacing between it and the fixed prong (33-35) and in that adjustment of the spacing between the prongs (33-38) is effected by a variable-length means (42-49) extending transversely between the prongs (33-38).

10. An implement (30) according to claim 9, characterised in that the variable-length means (42-49) comprises at least one transversely-extending screw-threaded shaft (42, 43) fitted with at least one first nut (44, 45).

11. An implement (30) according to claim 10, characterised by at least one second nut (46, 47) which is capable of cooperating with the first nut (44, 45) to lock the variable-length means (42-49).

12. An implement (30) according to claim 10 or claim 11, characterised in that the shaft (42, 43) carries a peg (48, 49) positioned to restrain the movement of the movable prong (36-38).

13. An implement (30) according to claim 12, characterised in that there are first and second shafts (42, 43) each carrying a peg (48, 49), in that the shafts extend through the movable prong (36-38), in that the peg (48) of the first shaft (42) is situated on one side of the movable prong (36-38) facing toward the fixed prong (33-35) and in that the peg (49) of the second shaft (43) is situated on the other side of the movable prong (36-38) facing away from the fixed prong (33-35).

14. An implement according to any of claims 10 to 13, characterised in that the shaft (42, 43) is provided with a non-circular portion, which portion is received within a hole (51, 52) in the first (36-38) or second (33-35) prong, the hole (51, 52) being shaped such that the shaft (42, 43) is prevented from turning freely about its longitudinal axis.

15. An implement (30) according to any of claims 6 to 14, characterised in that the movable prong (36-38) is tiltable or pivotable with respect to the second prong (33-35) such that the free ends of the prongs (33-38) may be moved together while retaining the spacing between the prongs (33-38) at the level of the pivot axis.

16. An implement according to claim 15 when appendant to any of claims 10 to 14, characterised in that a portion of the shaft (42, 43) is received within a hole (51, 52) in the first (36-38) or second (33-35) prong, the hole (51, 52) being wider than the shaft (42, 43) in a first direction parallel to the general longitudinal axis of the associated prong but being a close fit about the shaft (42, 43) in a second direction transverse to the first direction.

17. A picking and/or weeding implement (10, 30) comprising first and second prongs (14, 17, 33-38) adapted to be driven endways into soil, characterised in that the first and second prongs (14, 17, 33-38) are substantially plain with the exception of a barb extending from the free end region of the first prong (17, 36-38) towards the second prong (14, 33-35).

18. A set comprising a plurality of implements (10, 30) each as defined in any preceding claim and being of differing respective sizes.

19. A method of weeding and/or picking, comprising driving a pronged implement (30) into soil around or into a weed or plant or a root thereof to hook or impale the weed or plant or a root thereof on a barb (19, 39, 40) associated with a first or second prong (33-38) of the pronged implement (30), and pivoting or tilting the first or second prong (33-38) to move together the respective free end portions of the first and second prongs (33-38), characterised in that the pivoting or tilting action is performed while maintaining a gap between the first and second prongs (33-38) at the level of the pivot axis.

20. A method according to claim 19, comprising squeezing together the first and second prongs (33-38) by hand to effect the pivoting or tilting action.

21. A method according to claim 19 or claim 20, comprising adjusting the spacing between the first and second prongs (33-38) while maintaining a given angular relationship between them.
